**Europäisches Patentamt**

**European Patent Office**

**Office européen des brevets**

(19)

(11) Numéro de publication : **0 432 072 B1**

(12)

# FASCICULE DE BREVET EUROPEEN

(45) Date de publication du fascicule du brevet :
**01.09.93 Bulletin 93/35**

(51) Int. Cl.⁵ : **G06F 3/14,** G09G 3/20

(21) Numéro de dépôt : **90450016.2**

(22) Date de dépôt : **28.11.90**

(54) **Procédé et système de traitement d'images.**

(30) Priorité : **06.12.89 FR 8916432**

(43) Date de publication de la demande :
**12.06.91 Bulletin 91/24**

(45) Mention de la délivrance du brevet :
**01.09.93 Bulletin 93/35**

(84) Etats contractants désignés :
**AT BE CH DE DK ES FR GB GR IT LI LU NL SE**

(56) Documents cités :
**EP-A- 0 272 762
EP-A- 0 318 291
GB-A- 2 056 228**

(73) Titulaire : **SYNELEC S.A.
Zone Artisanale
F-12380 Saint Sernin sur Rance (FR)**

(72) Inventeur : **Souviron, Marc
Zone Artisanale
F-12380 Saint Sernin Sur Rance (FR)**

(74) Mandataire : **Ravina, Bernard
RAVINA S.A. 24, boulevard Riquet
F-31000 Toulouse (FR)**

Jouve, 18, rue Saint-Denis, 75001 PARIS

## Description

La présente invention concerne un procédé et un système de traitement d'images.

Elle concerne plus spécifiquement un procédé et un système de traitement en temps réel d'images source, fournies à une cadence C, pour produire des images panneau à visualiser sur un panneau de visualisation (mur d'images) constitué de N colonnes et M lignes d'écrans de visualisation.

Des panneaux de visualisation sont utilisés pour visualiser des images quelconques de grand format qui peuvent atteindre plusieurs dizaines de mètre carrés.

Ces panneaux de visualisation sont souvent placés dans des endroits de grande taille comme par exemple les stades, les salles d'aéroports, les salles de réunion ou autres, pour informer les personnes se trouvant dans ces dits endroits.

A l'heure actuelle, pour produire des images panneau à visualiser sur un panneau de visualisation constitué par N colonnes et M lignes d'écrans de visualisation (chaque écran est constitué de Y colonnes et X lignes) à partir d'images source constituées, chacune, d'une matrice de Y0 colonnes et de X0 lignes, on procède de la façon suivante:

- matricer (diviser en sous-matrices, appelé matrices fenêtre) MN matrices fenêtre égales, chaque image source X0 Y0, (si les rapports X0/M et/ou Y0/N ne sont pas des nombres entiers, les matrices fenêtre correspondant à la dernière colonne et/ou à la dernière ligne du panneau de visualisation seront plus petites que les autres matrices fenêtre ou la visualisation de l'image source sera partielle),
- interpoler les lignes et les colonnes de chaque matrice fenêtre en répétant chaque colonne N fois et chaque ligne M fois,
- livrer les matrices fenêtre interpolées, chacune, à l'écran correspondant du panneau de visualisation.

Si M est plus grand que N ou si N est plus grand que M, l'image panneau produite sera respectivement allongée ou élargie par rapport à l'image source.

Afin que l'image panneau remplisse complètement la surface de visualisation constituée de MX lignes et NY colonnes, ces lignes et ces colonnes doivent être respectivement des multiples de X0 et Y0.

Les limites et les inconvénients de cette technique sont:
- l'agrandissement de l'image source soit pour la largeur soit pour la hauteur doit être présenté par un nombre entier, ceci car les coefficients d'interpolation des lignes et des colonnes sont des nombres entiers (répétition),
- les images panneau produites sont grossières notamment dans le cas de grands agrandissements (effet de créneau).

Il existe par ailleurs, des méthodes de traitement d'images qui peuvent éviter la grossièreté de l'image produite en utilisant des fonctions d'interpolation compliquées.

Ces méthodes sont valables uniquement pour traiter des images statiques ou de faible résolution et ne sont pas appliquées sur des panneaux de visualisation constitués d'une matrice d'écrans. D'autre part, il est connu en soi de coder des images par sous-échantillonnage (cf. par exemple EP-A-272 762). La présente invention a pour but de proposer un procédé et un système de traitement, en temps réel, d'images source afin de produire des images panneau à visualiser sur un panneau de visualisation constitué de N colonnes et M lignes d'écrans de visualisation en évitant les inconvénients et en franchissant les limites de la technique actuelle.

Selon la présente invention:
- un coefficient quelconque d'interpolation de lignes ou de colonnes peut être utilisé.
- les écrans constituant le panneau de visualisation peuvent avoir, chacun, un nombre de lignes et un nombre de colonnes différents de ceux de l'image source, ceci sans qu'on ait besoin d'utiliser des convertisseurs de standards,
- les images panneau produites ne sont pas grossières,
- les images panneau produites peuvent remplir complètement n'importe quel format de panneau de visualisation.

A cet effet et selon une disposition, le procédé, faisant partie de la présente invention, de traitement en temps réel d'images fournies à une cadence C et constituées, chacune, d'une matrice de Y0 colonnes et X0 lignes, (X0 Y0 éléments) afin de produire des images panneau correspondant aux dites images source ou à une partie des dites images source, les images panneau étant visualisées sur un panneau de visualisation (mur d'images) constitué de N colonnes et de M lignes d'écrans de visualisation procédé suivant lequel:
- les images source fournies à la cadence C (ou la partie désirée de ces images source) sont matricées (divisées en matrices) chacune en images fenêtre d'un nombre MN, chacune étant constituée d'une manière générale de Y1 colonnes et X1 lignes, produisant ainsi MN flots d'images fenêtre chacun à la cadence C,
- chaque matrice fenêtre X1 Y1 est traitée pour produire une matrice de visualisation de Y4 colonnes et

EP 0 432 072 B1

X4 lignes à visualiser sur l'un des écrans de visualisation MN, procédé étant caractérisé en ce que chaque flot d'images fenêtre X1 Y1 est traité selon les étapes suivantes:

a- sous-échantillonner les colonnes Y1 et les lignes X1 de chaque image fenêtre pour produire une image intermédiaire constituée d'une matrice de Y2 colonnes et de X2 lignes (X2 Y2 éléments d'images) avec un coefficient de sous-échantillonnage de colonnes $K_C=Y2/Y1$ et un coefficient de sous-échantillonnage de lignes $K_L = X2/X1$,

où $k_C$ et $K_L$ ont indépendamment, chacun, une des valeurs 1, 1/2, 1/3,..., chaque ligne et chaque colonne de l'image intermédiaire remplaçant respectivement une ou plusieurs lignes ou colonnes de l'image fenêtre, les éléments constituant chaque ligne ou chaque colonne de l'image intermédiaire étant calculés comme la moyenne arithmétique ou la moyenne pondérée des éléments correspondants des lignes ou des colonnes de l'image fenêtre remplacée par la dite ligne ou la dite colonne de l'image intermédiaire,

b- stocker, à la candence C, dans des mémoires écriture/lecture, les images intermédiaires formées,

c- lire, dans le même ordre que celui du stockage et à une cadence C' égale ou différente à celle du stockage,

d- sur-échantillonner les colonnes Y2 et les lignes X2 de chaque image intermédiaire lue pour produire une image sortie constituée par une matrice de Y3 colonnes et X3 lignes avec un coefficient de sur-échantillonnage de colonnes $E_C=Y3/Y2$ et un coefficient de sur-échantillonnage de lignes $E_L=X3/X2$ où $E_C$ et $E_L$ ont indépendamment, chacun une valeur quelconque supérieure ou égale à 1, chaque élément d'une colonne ou d'une ligne de l'image sortie X3 Y3 étant calculé comme une moyenne pondérée en se basant sur les éléments correspondants voisins des colonnes ou des lignes de l'image intermédiaire à sur-échantillonner,

- inscrire chaque image sortie X3 Y3 dans une matrice X4 Y4, où Y3 est inférieure ou égale Y4 et X3 est inférieure ou égale à X4.

Suivant une autre disposition, le système de traitement mettant en oeuvre le procédé est du type de ceux comportant:

- des moyens de matriçage servant à matricer (diviser en matrices) chacune des images sources X0 Y0 (ou la partie désirée de ces images source) en images fenêtre d'un nombre MN, chacune est composée de Y1 colonnes et X1 lignes,

- des moyens de traitement transformant chaque image fenêtre X1 Y1 en image constituée de Y4 colonnes et X4 lignes à visualiser sur l'un des écrans de visualisation MN,

Ce système étant caractérisé en ce que les dits moyens de traitement sont:

A/- des processeurs de rééchantillonnage d'images à séquencement multiple (PRISM) d'un nombre MN, chaque PRISM étant constitué par:

a- une unité de sous-échantillonnage recevant à la cadence C les données des images fenêtre X1 Y1 sous une forme digitale, cette unité de sous-échantillonnage est composée de:

- une sous-unité de sous-échantillonnage de colonnes recevant les lignes de l'image fenêtre, chaque ligne étant composée de Y1 éléments et livrant des lignes, chacune, se composant de Y2 éléments avec un coefficient de sous-échantillonnage de colonnes de $K_C=Y2/Y1$,

- une sous-unité de sous-échantillonnage de lignes recevant les dites lignes (Y2 éléments/lignes) et livrant à la cadence C, des images intermédiaires X2 Y2, dans lesquelles un sous-échantillonnage est effectué sur les lignes avec un coefficient de sous-échantillonnage de lignes $K_L=X2/X1$,

b- un multiplexeur aiguilleur recevant les images intermédiaires X2 Y2 formées et les livrant l'une après l'autre à deux mémoires écriture/lecture, chaque mémoire recevant une image X2 Y2,

c- deux mémoires écriture/lecture construites par une mémoire segmentée en deux zones la première servant à l'écriture tandis que la seconde est lue; les rôles des deux zones étant permutés à la fin de l'écriture de chaque image,

d- un multiplexeur collecteur faisant lire à une cadence C', différente ou égale à C, les dites mémoires l'une après l'autre dans le même ordre que le multiplexeur aiguilleur à une unité de sur-échantillonnage,

e- une unité de sur-échantillonnage recevant, à la cadence C', les images intermédiaires X2 Y2 l'une après l'autre, cette unité de sur-échantillonnage étant commposée de:

- une sous-unité de sur-échantillonnage de colonnes recevant les lignes de l'image intermédiaire, chaque ligne étant composée de Y2 éléments et livrant des lignes, chacune se composant de Y3 éléments avec un coefficient de sur-échantillonnage de colonnes $E_C=Y3/Y2$,

- une sous-unité de sur-échantillonnage de lignes recevant les lignes de la sous-unité précédente (Y3 éléments/lignes) et livrant des images sortie X3 Y3 avec un sur-échantillonnage de lignes $E_L=X3/X2$,

3

B- une unité centrale de traitement (CPU) contrôlant les deux unités de de sous et sur-échantillonnage et les deux multiplexeurs de chacun MN PRISM,

C- une unité de commande (PC) liée à l'unité centrale de traitement et servant à y introduire, entre autres, les paramètres de traitement $K_C$, $K_L$, $E_C$ et $E_L$.

La présente invention sera comprise à la lecture de la description détaillée ci-après accompagnée des dessins dans lesquels:

- la figure 1 est un schéma qui présente le sous-échantillonnage et le sur-échantillonnage, tous les deux, en colonnes et en lignes,
- la figure 2 est un schéma qui présente la structure générale du système de traitement,

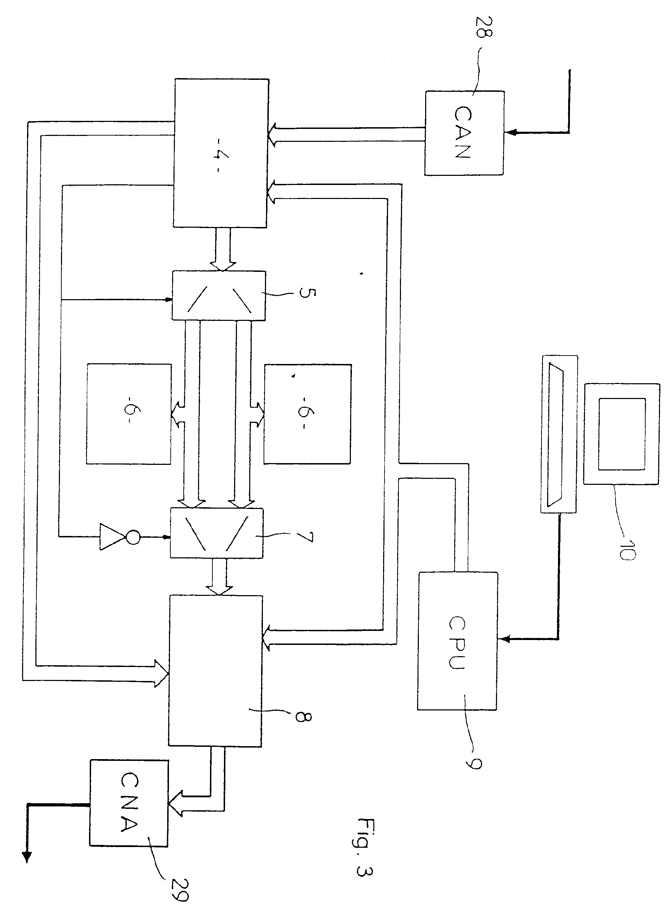

- la figure 3 est un schéma qui présente la structure d'un PRISM et sa liaison avec les autres organes du système,

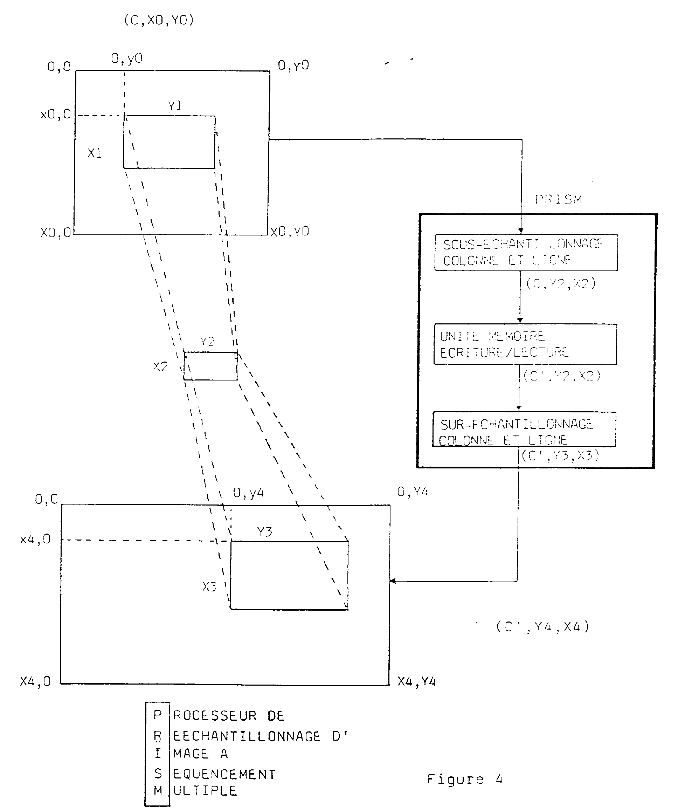

- la figure 4 est un schéma qui présente les variations subies par chaque image dues au traitement par un PRISM,
- les figures 5a et 5b sont deux schémas qui présentent des détails du traitement par sous-échantillonnage de colonnes,
- les figures 6a et 6b sont deux schémas qui présentent des détails du traitement par sous-échantillonnage de lignes,
- la figure 7 est un schéma qui présente des détails de sur-échantillonnage de colonnes,
- la figure 8 est un schéma qui présente des détails de sur-échantillonnage de lignes.

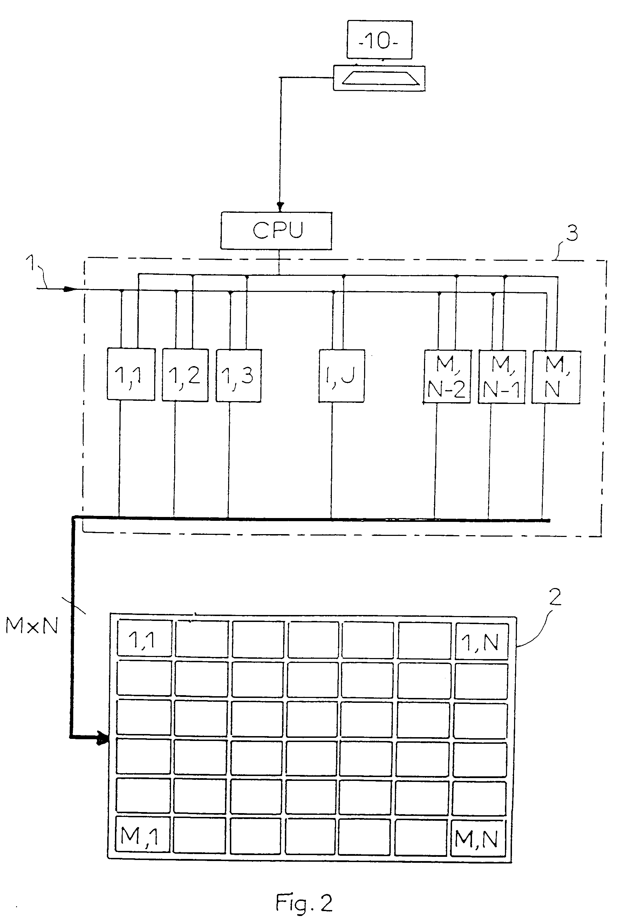

Sur la figure 2 est présentée l'architecture générale du système selon l'invention.

Comme il est connu, les images source arrivent en (1), elles sont divisées, chacune, en matrices d'un nombre MN.

Chaque matrice constitue une fenêtre ou une portion de l'image source et elle est, une fois traitée, visualisée sur l'un des NM écrans (2) de visualisation rangés selon N colonnes et M lignes.

L'invention se distingue de l'art antérieur par le procédé de traitement de chaque image fenêtre pour aboutir à une image sortie à visualiser sur l'un des écrans d'un panneau de visualisation.

Selon l'art antérieur, dans le domaine de visualisation de grand format à l'aide de plusieurs écrans, le traitement consiste à répéter chaque ligne et chaque colonne de l'image fenêtre un nombre de fois prédéterminé pour avoir une image sortie ayant le même nombre d'éléments que chaque écran du panneau.

Ceci nécessite que le coefficient d'agrandissement soit un nombre entier.

A titre d'exemple, pour agrandir une image source 4 fois, les lignes et les colonnes de chaque image fenêtre sont répétées, chacune, une fois pour avoir une image sortie ayant le double de nombre de lignes et de colonnes de l'image fenêtre, dans ce cas l'image panneau occupe la surface de 4 écrans de même nombre d'éléments que l'image source.

Chaque élément de l'image source est représenté par 4 éléments, ayant la même valeur, de l'image panneau. Les grains de l'image panneau sont quatre fois moins fins que ceux de l'image source.

Selon l'invention les restrictions sur le coefficient d'angrandissement sont éliminées et la préservation de la qualité de l'image source est meilleure.

Selon le procédé, faisant partie de la présente invention, les lignes et les colonnes de chaque image fenêtre subissent d'abord un sous-échantillonnage puis un sur-échantillonnage séparés par une mémorisation segmentée écriture/lecture.

L'usage d'un sous-échantillonnage permet d'un côté d'utiliser des mémoires de capacité modérée et d'un autre côté en coopérant avec le sur-échantillonnage de moduler à volonté les caractéristiques de l'image sortie faisant partie de l'image panneau notamment l'agrandissement et également le nombre d'éléments.

Dans le sous-échantillonnage comme dans le sur-échantillonnage, les éléments nouveaux de l'image intermédiaire ou de l'image sortie sont une moyenne pondérée des éléments voisins de l'image traitée.

Le sous-échantillonnage de l'image fenêtre est fait dans l'ordre suivant un sous-échantillonnage de colonnes puis un sous-échantillonnage de lignes.

Suivant le sous-échantillonnage de colonnes de l'image intermédiaire, les colonnes de l'image fenêtre (Y1 colonnes et X1 lignes) sont remplacées, chaque $K_C$ colonnes, par une seule colonne pour former l'image intermédiaire (Y2 colonnes et X2 lignes).

Chaque élément de chaque colonne de l'image intermédiaire est soit la moyenne arithmétique des $K_C$ éléments correspondants des colonnes concernées de l'image fenêtre soit la moyenne pondérée de ces éléments correspondants.

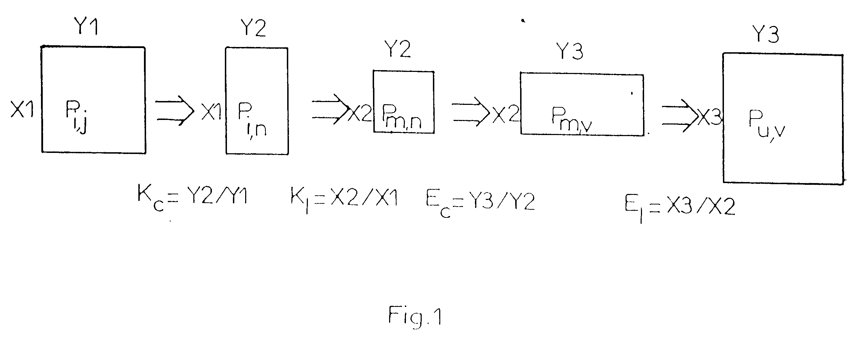

Si on considère (figure 1) un élément $P_{ij}$ de l'image fenêtre où i=1, 2...., X1 et j=1, 2..., Y1 et un élément $P_{i,n}$ de la ligne produite où n=1, 2,..., Y2, l'élément $P_{i,n}$ de la colonne n est calculable selon l'une des deux formules suivantes:

$$P_{i,n} = (1/K_C) \sum_{j=n}^{j = n+K_C-1} P_{i,j} \qquad (1)$$

dans laquelle l'élément $P_{i,n}$ est la moyenne arithmétique des éléments $P_{i,j},... P_{i,j} + K_C - 1$,
ou

$$P_{i,n} = \sum_{j=n}^{j=n+K_C-1} P_{i,j} \, a(j-n) \qquad (2)$$

dans laquelle l'élément Pm,n est la moyenne pondérée des éléments $P_{i,j},..., P_{i,j} + K_C - 1$,
où a=a(0), a(1),..., a($K_C$ - 1)

Les coefficients a sont fournis.

Le choix de ces éléments est fait pour donner certains effets aux images intermédiaires produites.

Le choix de a(S) comme une fonction positive symétrique plus ou moins aigüe ayant un seul sommet conduit à produire des images intermédiaires plus ou moins contrastées.

Le choix de a(S) comme une valeur constante égale à $1/K_C$ réduit la formule (2) à la formule (1).

Les signaux représentant les trois couleurs de l'image arrivent sous une forme digitale.

Chaque couleur est (par exemple) digitalisée sur 8 bits.

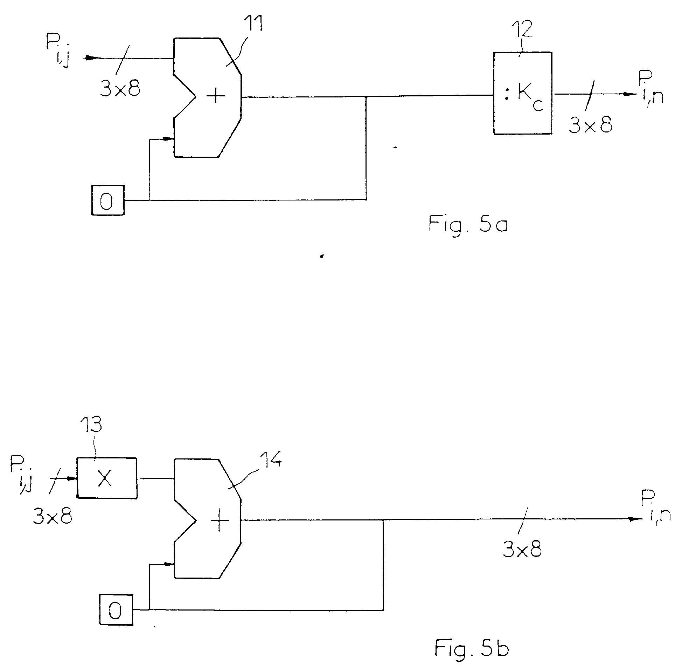

Pour réaliser ce sous-échantillonnage; la sous-unité de sous-échantillonnage (figure 5a) produisant la moyenne arithmétique comporte un additionneur accumulateur d'éléments (11) et un diviseur (12) l'additionneur recevant les lignes de l'image fenêtre, l'une après l'autre, chaque ligne comportant Y1 éléments, additionnant chaque $K_C$ élément et livrant la somme au diviseur qui la divise par $K_C$ produisant ainsi des lignes constituées, chacune, de Y2 élément où $K_C$=Y2/Y1.

La sous-unité de sous-échantillonnage (figure 5b) produisant la moyenne pondérée comporte un multiplicateur (13) et un additionneur accumulateur d'éléments (14) le multiplicateur recevant les lignes de l'image fenêtre, l'une après l'autre, chaque ligne comportant Y1, éléments multipliant les éléments défilants l'un après l'autre par les coefficients, a(0), a(1),...a, ($K_C$ - 1) et répétant ces opérations d'une façon cyclique selon le cyle $K_C$ éléments, l'additionneur additionnant les éléments de chaque cycle et livrant la somme produisant ainsi des lignes intermédiaires constituées, chacune de Y2 éléments où $K_C$=Y2/Y1.

Le sous-échantillonnage de lignes de l'image fenêtre s'effectue à la sortie du sous-échantillonnage de colonnes.

Suivant ce sous-échantillonnage, les lignes fournies par l'unité de sous-échantillonnage de colonnes, sont remplacées, chaque $K_L$ lignes, par une ligne faisant partie de l'image intermédiaire.

De même que pour le sous-échantillonnage de colonnes, le sous-échantillonnage de lignes est effectué soit suivant le principe de la moyenne arithmétique soit suivant le principe de la moyenne pondérée.

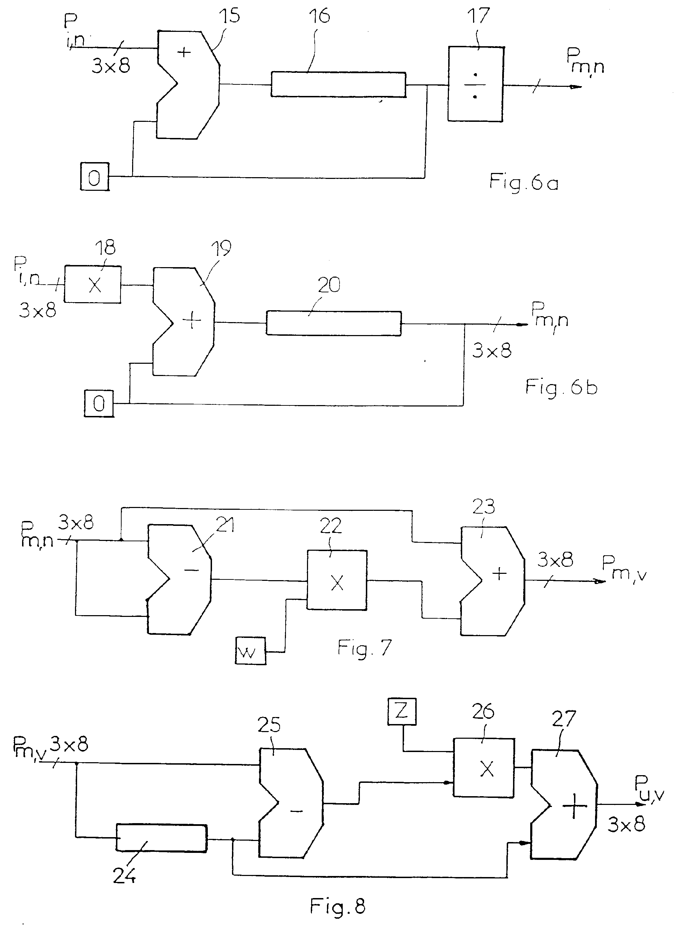

L'unité de sous-échantillonnage de lignes (figure 6a) suivant le principe de la moyenne arithmétique comporte un additionneur accumulateur de lignes (15), une mémoire de lignes (16), et un diviseur (17).

L'additionneur reçoit les lignes sortant de l'unité de sous-échantillonnage de colonnes constituées, chacune, de Y2 éléments, additionne chaque $K_L$ lignes ensemble en stockant au fur et à mesure les résultats intermédiaires dans la mémoire des lignes jusqu'à la $K_L$ème ligne.

Le diviseur divise chaque élément de la ligne stockée (l'accumulation de $K_L$ lignes) par $K_L$, produisant ainsi des images intermédiaires constituées, chacune de X2 lignes et de Y2 colonnes où $K_L$=X2/X1.

L'unité de sous-échantillonnage de lignes (figure 6b) comporte suivant le principe de la moyenne pondérée un multiplicateur (18), un additionneur accumulateur de lignes (19) et une mémoire de lignes (20).

Le multiplicateur reçoit les lignes de l'unité de sous-échantillonnage de colonnes constituées, chacune, de Y2 éléments et multiplie cycliquement les éléments défilants de chaque ligne par des coefficients a'(0), a'(1),..., a'($K_L$ -1) préfournis, les résultats de ces multiplications, pour les lignes, sont additionnés par l'additionneur de lignes, les résultats intermédiaires sont stockés dans la mémoire de lignes et c'est ainsi jusqu'à la $K_L$ème ligne qui est la moyenne pondérée des $K_L$ lignes en considération.

Les lignes produites ainsi forment les images intermédiaires (X2 lignes et Y2 colonnes).

Les images intermédiaires formées sont stockées l'une après l'autre dans une mémoire à deux segments chacun peut être lu ou écrit.

Il est à noter que les coefficients de sous-échantillonnage de colonnes et de lignes $K_C$ et $K_L$ peuvent avoir l'une des valeurs 1, 1/2, 1/3,....

Il est préférable que ces coefficients prennent, indépendamments, l'une des valeurs $(1/2^n)$, où n=1, 2,..., 8.

Le multiplexeur aiguilleur (5) livre les images intermédiaires formées (X2 Y2) aux deux mémoires (6) à la cadence C et d'une façon séquentielle.

Tandis que le multiplexeur (5) écrit à l'une des deux mémoires (6), le multiplexeur collecteur (7) lit l'autre mémoire contenant l'image (X2 Y2) précédente à l'unité de sur-échantillonnage (8).

A la fin de l'écriture le rôle des deux mémoires s'inverse.

L'unité de sur-échantillonnage (8) sur-échantillonne les images intermédiaires (X2 Y2) lues, d'abord suivant un sur-échantillonnage de colonnes puis suivant un sur-échantillonnage de lignes, ceci à l'aide des deux unités de sur-échantillonnage de colonnes et de lignes.

La sous-unité de sur-échantillonnage (figure 7) de colonnes comporte un soustracteur (21), un multiplicateur (22) et un additionneur (23).

Pour calculer l'élément $P_{m,v}$, le soustracteur lit les éléments $P_{m,n}$ et $P_{m,n+1}$ où n est la partie entière du rapport $v/E_C$ et retient la différence entre eux.

Le multipliicateur multplie cette différence par le coefficient W ou W est la partie décimale du rapport $v/E_C$.

L'additionneur additionne le résultat de cette multiplication à la valeur de l'élément $P_{m,n}$

$$P_{m,v} = W(P_{m,n+1} - P_{m,n}) + P_{m,n}$$

où

$n = E (v/E_C)$ et

$W = D(v/E_C)$.

L'unité de sur-échantillonnage (figure 8) de lignes comporte une mémoire de lignes (24), un soustracteur (25), un multiplicateur (26) et un additionneur (27).

Pour calculer le point $P_{u,v}$ la mémoire de lignes (24) stocke Y3 éléments dont l'élément $P_{m,v}$ où m est la partie entière du rapport $u/E_L$.

Le soustracteur lit les points $P_{m+1,v}$ et $P_{m,v}$ retient la différence entre eux.

Le multiplicateur multiplie cette différence par le coefficient Z où Z est la partie décimale du rapport $u/E_L$.

L'additionneur additionne le résultat de cette multiplication à la valeur de l'élément.
$P_{m,v}$

$$P_{u,v} = Z (P_{m+1,v} - P_{m,v}) + P_{m,v}$$

où

$m = E/(u/E_L)$ et,

$Z = D(u/E_L)$.

Le sur-échantillonnage qu'on vient de décrire a été basé, soit pour les colonnes, soit pour les lignes, sur seulement deux éléments de la ligne en traitement.

Il est bien évident que ce sur-échantillonnage peut être basé sur les quatre éléments les plus proches ou plus, toujours en se basant sur le principe de pondération.

Les images ainsi produites sous une forme digitale peuvent soit être directement exploitées soit transformées en forme analogique, ceci selon la nature des écrans utilisés.

Le système est muni d'un convertisseur analogique logique (28) et d'un convertisseur logique analogique (29).

## Revendications

1. Procédé de traitement en temps réel d'images source fournies à une cadence C et constituées, chacune, d'une matrice de Y0 colonnes et X0 lignes, afin de produire des images panneau correspondant aux dites images source ou à une partie des dites images source, les images panneau étant visualisées sur un panneau de visualisation ou mur d'images constitué de N colonnes et de M lignes d'écrans de visualisation, procédé suivant lequel:
   - les images source fournies à la cadence C, ou la partie désirée de ces images source, sont divisées en matrices chacune en images fenêtre d'un nombre MN, chacune étant constituée d'une manière générale de Y1 colonne et X1 ligne, produisant ainsi MN flots d'images fenêtre chacun à la cadence C,
   - chaque matrice fenêtre X1 Y1 est traitée pour produire une matrice de visualisation de Y4 colonnes et X4 lignes à visualiser sur l'un des écrans de visualisation MN, procédé étant caractérisé en ce que chaque flot d'images fenêtre X1 Y1 est traité selon les étapes suivantes:

a- sous-échantillonner les colonnes Y1 et les lignes X1 de chaque image fenêtre pour produire une image intermédiaire constituée d'une matrice de Y2 colonnes et de X2 lignes avec un coefficient de sous-échantillonnage de colonnes $K_C = Y2/Y1$ et un coefficient de sous-échantillonnage de lignes $K_L = X2/X1$,

où $k_C$ et $K_L$ ont indépendamment, chacun, une des valeurs 1, 1/2, 1/3,..., chaque ligne et chaque colonne de l'image intermédiaire remplaçant respectivement une ou plusieurs lignes ou colonnes de l'image fenêtre, les éléments constituant chaque ligne ou chaque colonne de l'image intermédiaire étant calculée comme la moyenne arithmétique ou la moyenne pondérée des éléments correspondants des lignes ou des colonnes de l'image fenêtre remplacée par la dite ligne ou la dite colonne de l'image intermédiaire,

b- stocker, à la candence C, dans des mémoires écriture/lecture, les images intermédiaires formées,

c- lire, dans le même ordre que celui du stockage et à une cadence C' égale ou différente de celle du stockage,

d- sur-échantillonner les colonnes Y2 et les lignes X2 de chaque image intermédiaire lue pour produire une image sortie constituée par une matrice de Y3 colonnes et X3 lignes avec un coefficient de sur-échantillonnage de colonnes $E_C = Y3/Y2$ et un coefficient de sur-échantillonnage de lignes $E_L = X3/X2$ où $E_C$ et $E_L$ ont indépendamment, chacun une vaeur quelconque supérieure ou égale à 1, chaque élément d'une colonne ou d'une ligne de l'image sortie X3 Y3 étant calculé comme une moyenne pondérée en se basant sur les éléments correspondants les voisins des colonnes ou des lignes de l'image intermédiaire à sur-échantillonner,

e- inscrire chaque image sortie X3 Y3 dans une matrice X4 Y4, où Y3 est inférieure ou égale Y4 et X3 est inférieure ou égale à X4.

2. Procédé selon la revendication 1 carractérisé en ce que les coefficients de sous-échantillonnage de lignes ($K_L$) et de colonnes ($K_C$) ont indépendamment l'une des valeurs $1/2^n$, où n = 0, 1, 2,..., 8.

3. Procédé selon la revendication 1 caractérisé en ce que chaque élément d'une ligne ou d'une colonne de l'image sortie X3 Y3 est calculé comme une moyenne pondérée des deux éléments correspondant des deux colonnes ou des deux lignes les plus proches de l'image intermédiaire X2 Y2.

4. Procédé selon l'une quelconque des revendications 1 à 3 pour produire des images panneaux visualisables sur un panneau d'écran de visualisation d'un nombre MN rangés selon N colonnes et M lignes caractérisé en ce que:
   - le sous-échantillonnage est effectué avec $K_C = K_L = 1$,
   - le sur-échantillonnage de lignes $E_L = M$,
   - le sur-échantillonnage de colonnes $E_C = N$.

5. Procédé selon la revendication 4 caractérisé en ce que:
   - $K_C = K_L = 1$,
   - $E_C = E_L = M = N$.

6. Système mettant en oeuvre le procédé selon l'une quelconque des revendications 1 à 3 de traitement en temps réel d'images source fournies à une cadence C, chacune étant constituée d'une matrice de Y0 colonnes et de X0 lignes afin de produire des images panneau correspondant aux dites images source ou à une partie des dites images source, les images panneau étant visualisées sur un panneau de visualisation ou mur d'images constitué de N colonnes et de M lignes d'écrans de visualisation, système du type de ceux comportant:
   - des moyens de matriçage servant à diviser en matrices chacune des images source X0 Y0 ou la partie désirée de ces images source en images fenêtre d'un nombre MN, chacune est composée de Y1 colonnes et X1 lignes,
   - des moyens de traitement transformant chaque image fenêtre X1 Y1 en image constituée de Y4 colonnes et X4 lignes à visualiser sur l'un des écrans de visualisation MN, système étant caractérisé en ce que les dits moyens de traitements sont:
   A/- des processeurs de rééchantillonnage d'images à séquencement multiple, PRISM (3), d'un nombre MN, chaque PRISM étant constitué par :
   a- une unité de sous-échantillonnage (4) recevant à la cadence C les données des images fenêtre X1 Y1 sous une forme digitale, cette unité de sous-échantillonnage est composée de:

- une sous-unité de sous-échantillonnage de colonnes recevant les lignes de l'image fenêtre, chaque ligne étant composée de Y1 éléments et livrant des lignes intermédiaires, chacune, se composant de Y2 éléments avec un coefficient de sous-échantillonnage de colonnes de $K_C=Y2/Y1$,
- une sous-unité de sous-échantillonnage de lignes recevant les lignes intermédiaires de Y2 éléments/lignes et livrant à la cadence C, des images intermédiaires X2 Y2, dans lesquelles un sous-échantillonnage est effectué sur les lignes selon $K_L=X2/X1$,

b- un multiplexeur aiguilleur (5) recevant les images intermédiaires X2 Y2 formées et les livrant l'une après l'autre à deux mémoires écriture/lecture, chaque mémoire recevant une image X2 Y2,

c- deux mémoires écriture/lecture (6) construites par une mémoire segmentée en deux zones la première servant à l'écriture tandis que la seconde est lue; les rôles des deux zones étant permutés à la fin de l'écriture de chaque image,

d- un multiplexeur collecteur (7) faisant lire à une cadence C' différente ou égale à C les dites mémoires l'une après l'autre dans le même ordre que le multiplexeur aiguilleur à une unité de sur-échantillonnage,

e- une unité de sur-échantillonnage (8) recevant, à la cadence C', les images intermédiaires X2 Y2 l'une après l'autre,

cette unité de sur-échantillonnage étant commposée de:

- une sous-unité de sur-échantillonnage de colonnes recevant les lignes de l'image intermédiaire, chaque ligne étant composée de Y2 éléments et livrant des lignes, chacune se composant de Y3 éléments avec un coefficient de sur-échantillonnage de colonne $E_C=Y3/Y2$,
- une sous-unité de sur-échantillonnage de lignes recevant les lignes de la sous-unité précédente (Y3 éléments/lignes) et livrant des images sortie X3 Y3 avec un sur-échantillonnage de lignes $E_C=X3/X2$,

B- une unité centrale de traitement, CPU (9), contrôlant les deux unités de sous et sur-échantillonnage et les deux multiplexeurs de chacun des MN PRISM,

C- une unité de commande, PC (10), liée à l'unité centrale de traitement et servant à y introduire, entre autres, les paramètres de traitement $K_C$, $K_L$, $E_C$ et $E_L$.

7. Système selon la revendication 6 caractérisé en ce que les deux sous-unités de sous-échantillonnage sont connectées l'une à l'autre en série.

8. Système selon la revendication 7 caractérisé en ce que la sous-unité de sous-échantillonnage de colonnes comporte un additionneur accumulateur d'éléments (11) et un diviseur (12), l'additionneur accumulateur d'éléments recevant les lignes de l'image fenêtre, chaque ligne comporte Y1 éléments additionnant chaque $K_C$ éléments ensemble et livrant la somme au diviseur qui la divise par $K_C$, produisant ainsi des lignes constituées, chacune, de Y2 éléments où $K_C=Y2/Y1$.

9. Système selon la revendication 7 caractérisé en ce que la sous-unité de sous-échantillonnage de colonnes comporte un multiplicateur (13) et un additionneur accumulateur d'éléments (14), le multiplicateur recevant les lignes de l'image fenêtre constituées, chacune, de Y1 éléments et multipliant cycliquement ces éléments, défilants l'un après l'autre par des coefficients a(0), a(1),...a($K_C$-1) préfournis selon la formule:

$$P_{i,n} = \sum_{j=n}^{j=n+K_C-1} P_{i,j}\ a(j-n)$$

où

$P_{i,n}$ est un élément de ligne calculée,

$P_{i,j}$ est un élément d'une ligne fenêtre et,

a = a(0), a(1),..., a($K_C$-1) sont des coefficients de pondérations fournis, produisant ainsi des lignes constituées chacune de Y2 éléments où $K_C=Y2/Y1$.

10. Système selon la revendication 7 caractérisé en ce que la sous-unité de sous-échantillonnage de lignes comporte un additionneur accumulateur de lignes (15), une mémoire de lignes (16) et un diviseur (17), l'additionneur recevant les lignes sortant de l'unité de sous-échantillonnage de colonnes et constituées chacune de Y2 éléments, additionnant chaque $K_L$ lignes ensemble en stockant au fur et à mesure les résultats intermédiaires dans la mémoire des lignes jusqu'à la $K_L$ème ligne, le diviseur divisant chaque élément de la ligne stockée, la ligne résultant de l'accumulation de $K_L$ lignes, dans la mémoire regroupant $K_L$, produisant ainsi des images intermédiaires constituées chacune de Y2 colonnes et de X2 lignes où $K_L = X2/X1$.

11. Système selon la revendication 7 caractérisé en ce que la sous-unité de sous-échantillonnage de lignes comporte un multiplicateur (18), un additionneur accumulateur de lignes (19), et une mémoire de lignes (20), le multiplicateur reçoit les lignes de l'unité de sous-échantillonnage de colonnes, constituées, chacune, de Y2 éléments et multipliant cycliquement les éléments défilants de chaque ligne par des coefficients a'(0), a'(1),...a'($K_L$-1) préfournis, l'additionneur accumulateur additionne chaque $K_L$ éléments et stockant, au fur et à mesure, les résultats intermédiaires dans la mémoire ligne, qui livre l'accumulation à la $K_{Lème}$ ligne produisant ainsi des images intermédiaires de X2 lignes et Y2 colonnes.

12. Système selon la revendication 6 caractérisé en ce que les deux sous-unités de sur-échantillonnage sont connectées l'une à l'autre en série.

13. Système selon la revendication 12 caractérisé en ce que la sous-unité de sur-échantillonnage de colonnes comporte un soustracteur (21), un mutiplicateur (22) et un additionneur (23), le soustracteur recevant les éléments de l'image intermédiaire X2 Y2, retenant la différence entre deux éléments successifs $P_{m,n}$ et $P_{m,n} + 1$, où n est la partie entière du rapport $V/E_C$, V étant le numéro de colonne de l'élément à calculer et $E_C$ étant le coefficient de sur-échantillonnage de colonnes, le multiplicateur multipliant cette différence par la partie décimale (W) du dit rapport l'additionneur additionnant le résultat de cette multiplication à la valeur de l'élément $P_{m,n}$ produisant ainsi un élément $P_{m,v}$ selon:

$$P_{m,v} = w (P_{m,n+1} - P_{m,n}) + P_{m,n}$$

où

$n = E (v/E_C)$ et
$w = D (v/E_C)$.

14. Système selon la revendication 12 caractérisé en ce que la sous-unité de sur-échantillonnage de lignes comporte une mémoire de lignes (24), un soustracteur (25), un multiplicateur (26) et un additionneur (27), la mémoire de lignes stockant Y3 éléments dont l'élément $P_{m,v}$ où m est la partie entière du rapport $u/E_L$, u étant le numéro de ligne de l'élément à calculer et $E_L$ étant le coefficient de sur-échantillonnage de lignes, le soustracteur lisant les deux éléments successifs $P_{m,v}$ et $P_{m+1v}$ et retenant la différence entre eux, le multiplateur multipliant cette différence par la partie décimale (Z) du dit rapport, l'additionneur additionnant le résultat de cette mulitplication à la valeur de l'élément $P_{m,v}$ selon

$$P_{u,v} = Z (P_{m+1/v} - P_{m,v}) + P_{m,v}$$

où

$m = E (u/E_L)$ et
$Z = D (u/E_L)$.

**Patentansprüche**

1. Verfahren zur Echtzeitverarbeitung von Quellbildern, die in einem Takt C geliefert werden und jeweils aus einer Matrix von Y0 Spalten und X0 Zeilen bestehen, um Feldbilder zu erzeugen, die den Quellbildern oder einem Teil der Quellbilder entsprechen, wobei die Feldbilder auf einem Anzeigefeld oder einer Bildwand dargestellt werden, die aus N Spalten und M Zeilen von Anzeigebildschirmen bestehen, wobei nach dem Verfahren
   - die in dem Takt C gelieferten Quellbilder oder der gewünschte Teil der Quellbilder in Matrizen mit jeweils einer Anzahl MN von Fensterbildern unterteilt werden, wobei jedes allgemein aus einer Spalte Y1 und einer Zeile X1 besteht, die damit MN Fensterbildflüsse jeweils im Takt C erzeugen;
   - jede Fenstermatrix Y1 Y1 so verarbeitet wird, daß sie eine Anzeigematrix aus Y4 Spalten und X4 Zeilen erzeugt, die auf einem der Anzeigebildschirme MN anzuzeigen sind, wobei das Verfahren dadurch gekennzeichnet ist, daß jeder Fensterbildfluß X1 Y1 nach den folgenden Schritten verarbeitet wird:
      a- Unterabtasten der Spalten Y1 und der Zeilen X1 jedes Fensterbildes, um ein Zwischenbild zu erzeugen, das aus einer Matrix aus Y2 Spalten und X2 Zeilen besteht, bei einem Spalten-Unterabtastkoeffizienten von $K_C = Y2/Y1$ und einem Zeilen-Unterabtastkoeffizienten von $K_L = X2/X1$, worin $K_C$ und $K_L$ jeweils unabhängig einen der Werte 1, 1/2, 1/3, ..., aufweisen, jede Zeile und jede Spalte des Zwischenbildes jeweils eine oder mehrere Zeilen oder Spalten des Fensterbildes ersetzen, wobei die jede Zeile oder jede Spalte des Zwischenbildes bildenden Mittel als das arithmetische Mittel oder das gewichtete Mittel der entsprechenden Elemente der Zeilen oder der Spalten des durch die Zeile oder die Spalte des Zwischenbildes ersetzten Fensterbildes berechnet sind,

b- Speichern der gebildeten Zwischenbilder in Schreib-Lese-Speichern im Takt C,

c- Auslesen in der gleichen Reihenfolge wie beim Speichern und in einem Takt C', der gleich dem Speichertakt oder davon verschieden ist,

d- Überabtasten der Spalten Y2 und der Zeilen X2 jedes ausgelesenen Zwischenbildes, um ein Ausgangsbild zu erzeugen, das aus einer Matrix aus Y3 spalten und X3 Zeilen besteht, bei einem Spalten-Überabtastkoeffizienten $E_C = Y3/Y2$ und einem Zeilen-Überabtastkoeffizienten $E_L = X3/X2$, worin $E_C$ und $E_L$ unabhängig voneinander einen beliebigen Wert aufweisen, der höher als oder gleich 1 ist, wobei jedes Element einer Spalte oder einer Zeile des Ausgangsbildes X3 Y3 unter Zugrundelegung der entsprechenden Nachbarspalten oder -linien des überabzutastenden Zwischenbildes als ein gewichtetes Mittel berechnet ist,

e- Einschreiben jedes Ausgangsbildes X3 Y3 in einer Matrix X4 Y4, worin Y3 kleiner oder gleich Y4 und X3 kleiner oder gleich X4 ist.

2. Verfahren nach Anspruch 1, dadurch gekennzeichnet, daß die Zeilen ($K_L$)- und die Spalten ($K_C$)-Unterabstastkoeffizienten unabhängig einen der Werte $1/2^n$ aufweisen, worin N = 0, 1, 2, ..., 8.

3. Verfahren nach Anspruch 1, dadurch gekennzeichnet, daß jedes Element einer Zeile oder einer Spalte des Ausgangsbildes X3 Y3 als ein gewichtetes Mittel der beiden den dem Zwischenbild X2 Y2 am nächstenliegenden Spalten und Zeilen entsprechenden Elemente berechnet ist.

4. Verfahren nach einem der Ansprüche 1 bis 3 zum Erzeugen von auf dem Feld eines Anzeigebildschirms anzeigbaren Feldbildern mit einer Anzahl MN, geordnet nach N Spalten und M Zeilen, dadurch gekennzeichnet, daß:
   - die Unterabtastung mit $K_C = K_L = 1$ durchgeführt wird,
   - die Zeilen-Überabtastung $E_L = M$,
   - die Spalten-Überabtastung $E_C = N$.

5. Verfahren nach Anspruch 4, dadurch gekennzeichnet, daß:
   - $K_C = K_L = 1$,
   - $E_C = E_L = M = N$.

6. System, das das Verfahren nach einem der Ansprüche 1 bis 3 zur Echtzeitverarbeitung von Quellbildern benutzt, die in einem Takt C geliefert werden, wobei jedes aus einer Matrix aus Y0 Spalten und X0 Zeilen besteht, um Feldbilder zu erzeugen, die den Quellbildern oder einem Teil der Quellbilder entsprechen, wobei die Feldbilder auf einem Anzeigefeld oder einer Bildwand dargestellt werden, die aus N Spalten und M Zeilen von Anzeigebildschirmen bestehen, wobei das System von dem Typ ist, der aufweist:
   - Matrizierungsmittel, die dazu dienen, jedes der Quellbilder X0 Y0 oder den gewünschten Teil der Quellbilder in Fensterbilder einer Anzahl von MN zu matrizieren (in Matrizen zu unterteilen), wobei jedes aus Y1 Spalten und X1 Zeilen zusammengesetzt ist,
   - Verarbeitungsmittel, die jedes Fensterbild X1 Y1 in ein Bild transformieren, das aus auf einem der Anzeigebildschirme MN darzustellenden Y4 Spalten und X4 Zeilen besteht, wobei das System dadurch gekennzeichnet ist, daß die Verarbeitungsmittel sind:
      A- Prozessoren zum Wiederabtasten von Bildern mit Mehrfachfolgesteuerung, PRISM (3), einer Anzahl von MN, wobei jeder PRISM gebildet ist durch:
         a- eine Unterabtasteinheit (4), die im Takt C die Daten der Fensterbilder X1 Y1 in digitaler Form empfängt, wobei die Unterabtasteinheit zusammengesetzt ist aus:
            - einer Spalten-Unterabtastuntereinheit, die die Zeilen des Fensterbildes empfängt, wobei jede Zeile aus Y1 Elementen zusammengesetzt ist und jeweils Zwischenzeilen liefert, die sich aus Y2 Elementen zusammensetzen, mit einem Spalten-Unterabtastkoeffizienten von $K_C = Y2/Y1$;
            - einer Zeilen-Unterabtastuntereinheit, die die Zwischenzeilen aus Y2 Elementen/Zeilen empfängt und im Takt C Zwischenbilder X2 Y2 liefert, in denen an den Zeilen nach $K_L$ = X2/X1 eine Unterabtastung durchgeführt wird,

b- einen Verzweigungsmultiplexer (5), der die gebildeten Zwischenbilder X2 Y2 empfängt und sie nacheinander an zwei Schreib-Lese-Speicher liefert, wobei jeder Speicher ein Bild X2 Y2 empfängt,

c- zwei Schreib-Lese-Speicher (6), die durch einen in zwei Zonen segmentierten Speicher gebildet sind, wobei die erste zum Schreiben dient, während die zweite ausgelesen wird; wobei die Rollen der beiden Zonen am Ende des Schreibens jedes Bildes vertauscht werden,

d- einen Sammmelmultiplexer (7), der die Überabtasteinheit in einem Takt C', der unterschiedlich von oder gleich C ist, die Speicher nacheinander in der gleichen Reihenfolge auslesen läßt wie der Verzweigungsmultiplexer,

e- eine Überabtasteinheit (8), die in einem Takt C' nacheinander die Zwischenbilder X2 Y2 empfängt,

wobei die Überabtasteinheit zusammengesetzt ist aus:

- einer Spalten-Überabtastunterinheit, die die Zeilen des Zwischenbildes empfängt, wobei jede Zeile aus Y2 Elementen gebildet ist und Zeilen liefert, die sich jeweils aus Y3 Elementen zusammensetzen, bei einem Spalten-Überabtastkoeffizienten $E_C$ = Y3/Y2,
- eine Zeilen-Überabtastunterinheit, die die Zeilen der vorhergehenden Untereinheit (Y3 Elemente/Zeilen) empfängt und Ausgangsbilder Y3 Y3 mit einer Zeilen-Überabtastung $E_C$ = X3/X2 liefert;

B- eine Zentraleinheit CPU (9), die die beiden Unter- und Überabtasteinheiten sowie die beiden Multiplexer jedes MN PRISM kontrolliert,

C- eine Steuereinheit PC (10), die mit der Zentraleinheit verbunden ist und dazu dient, unter anderem die Verarbeitungsparameter $K_C$, $K_L$, $E_C$ und $E_L$ einzuführen.

7. System nach Anspruch 6, dadurch gekennzeichnet, daß die beiden Unterabtastuntereinheiten miteinander in Reihe geschaltet sind.

8. System nach Anspruch 7, dadurch gekennzeichnet, daß die Spalten-Unterabtastuntereinheit einen Element-Addierakkumulator (11) und eine Dividiereinrichtung (12) aufweist, wobei der Element-Addierakkumulator die Zeilen des Fensterbildes empfängt, wobei jede Zeile Y1 Elemente aufweist, jedes $K_C$ Elemente zusammenaddiert und die Summe zur Dividiereinrichtung liefert, die sie durch $K_C$ dividiert, wodurch Zeilen erzeugt werden, die jeweils aus Y2 Elementen bestehen, worin $K_C$ = Y2/Y1.

9. System nach Anspruch 7, dadurch gekennzeichnet, daß die Spalten-Unterabtastunterinheit einen Multiplizierer (13) und einen Element-Addierakkumulator (14) aufweist, wobei der Multiplizierer die Zeilen des Fensterbildes empfängt, die jeweils aus Y1 Elementen bestehen und diese nacheinander durchlaufenden Elemente zyklisch mit Koeffizienten a(0), a(1), ... a ($K_C$-1) multipliziert, die nach der folgenden Formel vorgeliefert sind:

$$P_{i,\,n} = \sum_{j\,=\,n;}^{j\,=\,n+K_C-1} P_{i,j} \quad a(j-n)$$

worin

$P_{i,\,n}$ ein berechnetes Zeilenelement ist,

$P_{i,\,j}$ ein Element einer Fensterzeile ist, und

a = a(0), a(1), ..., a ($K_C$-1) gelieferte Wichtungskoeffizienten sind, wodurch Zeilen gebildet werden, die jeweils aus Y2 Elementen bestehen, worin $K_C$ = Y2/Y1.

10. System nach Anspruch 7, dadurch gekennzeichnet, daß die Zeilen-Unterabtastunterinheit einen Zeilen-Addierakkumulator (15), einen Zeilenspeicher (16) sowie eine Dividiereinrichtung (17) aufweist, wobei der Addierer die Zeilen empfängt, die aus der Spalten-Unterabtasteinheit kommen und jeweils aus Y2 Elementen bestehen, jedes $K_L$ Zeilen zusammenaddiert, wobei er bis zu der $K_L$-ten Zeile entsprechend die Zwischenresultate in dem Zeilenspeicher speichert, wobei die Dividiereinrichtung jedes Element der in dem $K_L$ sammelnden Speicher gespeicherten Zeile dividiert, wobei sich die Zeile aus der Akkumulierung von $K_L$ Zeilen ergibt, wodurch Zwischenbilder erzeugt werden, die jeweils aus Y2 Spalten und X2 Zeilen bestehen, worin $K_L$ = X2/X1.

11. System nach Anspruch 7, dadurch gekennzeichnet, daß die Zeilen-Unterabtastuntereinheit einen Multiplizierer (18), einen Zeilen-Addierakkumlator (19) sowie einen Zeilenspeicher (20) enthält, der Multiplizierer die Zeilen der Spalten-Unterabtasteinheit empfängt, die jeweils aus Y2 Elementen bestehen, und zyklisch die durchlaufenden Elemente jeder Zeile mit vorgelieferten Koeffizienten a'(0), a'(1), ... a'($K_L$-1) multipliziert, wobei der Addierakkumulator jedes $K_L$ Elemente addiert und die Zwischenresultat entsprechend in dem Zeilenspeicher speichert, der die Akkumulierung bis zu der $K_L$-ten Zeile liefert, wodurch Zwischenbilder aus X2 Zeilen und Y2 Spalten erzeugt werden.

12. System nach Anspruch 6, dadurch gekennzeichnet, daß die beiden Überabtastuntereinheiten miteinander in Reihe geschaltet sind.

13. System nach Anspruch 12, dadurch gekennzeichnet, daß die Spalten-Überabtastuntereinheit einen Subtrahierer (21), einen Multiplizierer (22) und einen Addierer (23) aufweist, wobei der Subtrahierer die Elemente des Zwischenbildes X2 Y2 empfängt, wobei er die Differenz zwischen zwei aufeinanderfolgenden Elementen $P_{m,n}$ und $P_{m,n+1}$ zurückbehält, worin n der ganzzahlige Teil des Verhältnisses $V/E_C$ ist, V die Spaltenzahl des zu berechnenden Elements und $E_C$ der Spalten-Überabtastkoeffizient ist, wobei der Multiplizierer diese Differenz mit dem Dezimalteil (W) des Verhältnisses multipliziert und der Addierer das Ergebnis dieser Multiplikation zu dem Wert des Elements $P_{m,n}$ addiert, wodurch ein Element $P_{m,v}$ erzeugt wird, nach:

$$P_{m,v} = w(P_{m,n+1} - P_{m,n}) + P_{m,n}$$

worin

$n = E\ (v/E_C)$ und
$w = D\ (v/E_C)$.

14. System nach Anspruch 12, dadurch gekennzeichnet, daß die Zeilen-Überabtastuntereinheit einen Zeilenspeicher (24), einen Subtrahierer (25), einen Multiplizierer (26) und einen Addierer (27) aufweist, wobei der Zeilenspeicher Y3 Elemente speichert, unter anderem das Element $P_{m,v}$, worin m der ganzzahlige Teil des Verhältnisses $u/E_L$ ist, wobei u die Zeilenzahl des zu berechnenden Elements und $E_L$ der Zeilen-Überabtastkoeffizient ist, wobei der Subtrahierer die beiden Aufeinanderfolgenden Elemente $P_{m,v}$ und $P_{m+1v}$ liest und die Differenz zwischen ihnen zurückbehält, wobei der Multiplizierer diese Differenz mit dem Dezimalteil (Z) des Verhältnisses multipliziert, und der Addierer das Resultat dieser Multiplikation zu dem Wert des Elements $P_{m,v}$ addiert, nach:

$$P_{u,v} = Z(P_{m+1/v} - P_{m,v}) + P_{m,v'}$$

worin

$m = E\ (u/E_L)$ und
$Z = D\ (u/E_L)$.

## Claims

1. Method of processing in real time source images supplied at a speed C and each composed of a matrix of Y0 columns and X0 lines, in order to produce panel images corresponding to said source images or to a part of said source images, the panel images being displayed on a display panel or image wall composed of N columns and M display screen lines, in accordance with which method:
   - the source images supplied at the speed C, or the desired part of these source images, are divided into matrices each in window images in a number MN, each being composed generally of Y1 column and X1 line, thus producing MN window image streams, each at the speed C,
   - each window matrix X1 Y1 is processed to produce a display matrix of Y4 columns and X4 lines to be displayed on one of the display screens MN, the method being characterised in that each window image stream X1 Y1 is processed according to the following steps:
      a- undersampling the columns Y1 and the lines X1 of each window image to produce an intermediate image composed of a matrix of Y2 columns and X2 lines with a column undersampling coefficient $K_C$=Y2/Y1 and a line undersampling coefficient $K_L$=X2/X1,
      where $K_C$ and $K_L$ each have independently one of the values 1, 1/2, 1/3,..., each line and each column of the intermediate image replacing respectively one or several lines or columns of the window image, the elements composing each line or each column of the intermediate image being calculated as the arithmetic mean or the weighted mean of the elements corresponding to the lines or the columns of the window image replaced by said line or said column of the intermediate image,

b- storing, at the speed C, in read/write memories, the intermediate images formed,

c- reading, in the same order as that of storing and at a speed C' equal or different to that of storing,

d- oversampling the columns Y2 and the lines X2 of each intermediate image read to produce an output image composed of a matrix of Y3 columns and X3 lines with a column oversampling coefficient $E_C=Y3/Y2$ and a line oversampling coefficient $E_L=X3/X2$ where $E_C$ and $E_L$ each have independently any value greater than or equal to 1, each element of a column or a line of the output image X3 Y3 being calculated as a mean weighted by being based on the elements corresponding to the neighbours of the columns or the lines of the intermediate image to be oversampled,

e- entering each output image X3 Y3 in a matrix X4 Y4, where Y3 is less than or equal to Y4 and X3 is less than or equal to X4.

2. Method according to claim 1 characterised in that the line and column undersampling coefficients ($K_L$, $K_C$) have independently one of the values $1/2^n$, where n = 0, 1, 2, ..., 8.

3. Method according to claim 1 characterised in that each element of a line or a column of the output image X3 Y3 is calculated as a weighted mean of the two elements corresponding to the two nearest columns or lines of the intermediate image X2 Y2.

4. Method according to any of claims 1 to 3 for producing panel images able to be displayed on a display screen panel in a number MN ordered according to N columns and M lines characterised in that
   - the undersampling is carried out with $K_C=K_L=1$,
   - the line oversampling $E_L=M$,
   - the column oversampling $E_C=N$.

5. Method according to claim 4 characterised in that:
   - $K_C=K_L=1$,
   - $E_C=E_L=M=N$.

6. System implementing the method according to any of claims 1 to 3 of processing in real time source images supplied at a speed C, each being composed of a matrix of Y0 columns and X0 lines in order to produce panel images corresponding to said source images or to a part of said source images, the panel images being displayed on a display panel or image wall composed of N columns and M display screen lines, the system of the type comprising:
   - matrix means serving to divide into matrices each of the source images X0 Y0 or the desired part of these source images in window images in a number MN, each is composed of Y1 columns and X1 lines,
   - processing means transforming each window image X1 Y1 into an image composed of Y4 columns and X4 lines to be displayed on one of the display screens MN, the system being characterised in that said processing means are:

   A- multiple sequencing image resampling processors PRISM (3), in a number MN, each PRISM being composed of:
   
   a- an undersampling unit (4) receiving at the speed C the data of the window image X1 Y1 in a digital form, this undersampling unit is made up of:
   - a column undersampling sub-unit receiving the lines of the window image, each line being made up of Y1 elements and reading the intermediate lines, each being made up of Y2 elements with a column undersampling coefficient of $K_C=Y2/Y1$.
   - a line undersampling sub-unit receiving the intermediate lines of Y2 elements/lines and reading at the speed C, the intermediate images X2 Y2, in which an undersampling is carried out on the lines according to $K_L=X2/X1$,

   b- a switching multiplexer (5) receiving the intermediate images X2 Y2 formed and reading them one after the other to two read/write memories, each memory receiving an image X2 Y2,

   c- two read/write memories (6) constructed of one memory segmented in two zones, the first serving to write while the second is read; the functions of the two zones being changed round at the end of writing each image,

d- a collector multiplexer (7) causing said memories to be read at a speed C' different or equal to C, one after the other in the same order as the switching multiplexer to an oversampling unit,

e- an oversampling unit (8) receiving, at the speed C', the intermediate images X2 Y2 one after the other, this oversampling unit being made up of:

- a column oversampling sub-unit receiving the lines of the intermediate image, each line being made up of Y2 elements and reading the lines, each being made up of Y3 elements with a column oversampling coefficient $E_C=Y3/Y2$,
- a line oversampling sub-unit receiving the lines of the preceding sub-unit (Y3 elements/lines) and reading the output images X3 Y3 with a line oversampling $E_C=X3/X2$,

B- a central processing unit, CPU (9), controlling the two undersampling and oversampling units and the two multiplexers of each of the MN PRISM,

C- a command unit, PC (10), linked to the central processing unit and serving to introduce thereto, among others, the processing network constants $K_C$, $K_L$, $E_C$ and $E_L$.

7. System according to claim 6 characterised in that the two undersampling sub-units are connected to each other in series.

8. System according to claim 7 characterised in that the column undersampling sub-unit comprises an element accumulating adder (11) and a divider (12), the element accumulating adder receiving the lines of the window image, each line comprises Y1 elements adding each $K_C$ elements together and reading the sum to the divider which divides them by $K_C$, thus producing the lines each composed of Y2 elements where $K_C=Y2/Y1$.

9. System according to claim 7 characterised in that the column undersampling sub-unit comprises a multiplier (13) and an element accumulating adder (14), the multiplier receiving the lines of the window image, each composed of Y1 elements and multiplying these elements cyclically, scrolling one after the other, by the coefficients a(0), a(1),.... $a(K_C-1)$ pre-supplied according to the formula:

$$P_{i,n}= \sum_{j=n}^{j=n+K_C-1} P_{i,j}a(j-n)$$

where

$P_{i,n}$ is a calculated line element,

$P_{i,j}$ is an element of a window line and,

a=a (0), a(1),..., $a(K_c-1)$ are coefficients of supplied weightings, thus producing the lines each composed of Y2 elements where $K_C=Y2/Y1$.

10. System according to claim 7 characterised in that the line undersampling sub-unit comprises a line accumulating adder (15), a line memory (16) and a divider (17), the adder receiving the lines output from the column undersampling unit and each composed of Y2 elements, adding each $K_L$ lines together while storing little by little the intermediate results in the line memory as far as the $K_L$th line, the divider dividing each element of the line, resulting from the accumulation of $K_L$ lines, stored in the $K_L$ grouping memory, thus producing intermediate images each composed of Y2 columns and X2 lines where $K_L=X2/X1$.

11. System according to claim 7 characterised in that the line undersampling sub-unit comprises a multiplier (18), a line accumulating adder (19), and a line memory (20), the multiplier receives the lines from the column undersampling unit, each composed of Y2 elements and multiplying cyclically the scrolling elements of each line by the pre-supplied coefficients a'(0), a'(1),.... $a'(K_L-1)$, the accumulating adder adds each $K_L$ elements and stores, little by little, the intermediate results in the line memory, which reads the accumulation to the $K_L$th line thus producing intermediate images of X2 lines and Y2 columns.

12. System according to claim 6 characterised in that the two oversampling sub-units are connected to each other in series.

13. System according to claim 12 characterised in that the column oversampling sub-unit comprises a subtracter (21), a multiplier (22) and an adder (23), the subtracter receiving the elements of the intermediate image X2 Y2, retaining the different between two successive elements $P_{m,n}$ and $P_{m,n}+1$ where n is the integer part of the ratio $V/E_C$, V being the column number of the element to be calculated and $E_C$ being the column oversampling coefficient, the multiplier multiplying this difference by the decimal part (W) of said ratio, the adder adding the result of this multiplication to the value of the element $P_{m,n}$, thus producing an element $-7-P_{m,v}$ according to:

$$P_{m,v} = W (P_{m,n+1} - P_{m,n}) + P_{m,n}$$

where

$n = E(v/E_C)$ and
$w = D (v/E_C)$.

14. System according to claim 12 characterised in that the line oversampling sub-unit comprises a line memory (24), a subtracter (25), a multiplier (26) and an adder (27), the line memory storing Y3 elements of which the element $P_{m,v}$ where m is the integer part of the ratio $u/E_L$, u being the line number of the element to be calculated and $E_L$ being the line oversampling coefficient, the subtracter reading the two successive elements $P_{m,v}$ and $P_{m+1,v}$ and retaining the difference between them, the multiplier multiplying this difference by the decimal part (Z) of said ratio, the adder adding the result of this multiplication to the value of the element $P_{m,v}$ according to

$$P_{u,v} = Z(P_{m+1,v} - P_{m,v}) + P_{m,v}$$

where

$m = E (u/E_L)$ and
$Z = D (u/E_L)$.

EP 0 432 072 B1

Y1    Y2    Y2    Y3    Y3

$X1$ $P_{i,j}$ $\Rightarrow$ $X1$ $P_{i,n}$ $\Rightarrow$ $X2$ $P_{m,n}$ $\Rightarrow$ $X2$ $P_{m,v}$ $\Rightarrow$ $X3$ $P_{u,v}$

$K_c = Y2/Y1 \qquad K_l = X2/X1 \qquad E_c = Y3/Y2 \qquad E_l = X3/X2$

Fig.1

Fig. 2

Fig. 3

(C,X0,Y0)

0,0       0,y0          0,Y0

x0,0

Y1

X1

X0,0                 X0,Y0

PRISM

SOUS-ECHANTILLONNAGE
COLONNE ET LIGNE

(C,Y2,X2)

UNITE MEMOIRE
ECRITURE/LECTURE

(C',Y2,X2)

SUR-ECHANTILLONNAGE
COLONNE ET LIGNE

(C',Y3,X3)

Y2

X2

0,0       0,y4          0,Y4

x4,0

Y3

X3

X4,0                 X4,Y4

(C',Y4,X4)

| | |
|---|---|
| P | ROCESSEUR DE |
| R | EECHANTILLONNAGE D' |
| I | MAGE A |
| S | EQUENCEMENT |
| M | ULTIPLE |

Figure 4

Fig. 5a

Fig. 5b

Fig.6a

Fig.6b

Fig.7

Fig.8